# EUROPÄISCHE PATENTANMELDUNG

(11) **EP 4 382 783 A1**
(43) Veröffentlichungstag der Anmeldung: **12.06.2024**
(21) Anmeldenummer: 22212293.9
(22) Anmeldetag: 08.12.2022
(51) Int. Cl.: F16K 15/03, F16K 15/04, F16K 15/06, F16K 27/02

(54) **RÜCKSCHLAGVENTIL**

(71) Anmelder: TI Automotive Technology Center GmbH, 76437 Rastatt (DE)
(72) Erfinder: Boecker, Albert, 76275 Ettlingen (DE); Winter, Matthias, 76437 Rastatt (DE); Tuzin, Artem, 76297 Stutensee (DE); Schaefer, Thorsten, 76889 Steinfeld (DE); Deibel, Florian, 76547 Sinzheim (DE)
(74) Vertreter: Reiser & Partner Patentanwälte mbB

(57) **Zusammenfassung**

Rückschlagventil (1), umfassend einen von einem Fluid durchströmbaren Strömungskanal (2) und zumindest einen Sperrkörper (3), wobei der Sperrkörper (3) in dem Strömungskanal (2) beweglich angeordnet ist, wobei der Sperrkörper (3) zwischen einer Sperrstellung und einer Durchlassstellung bewegbar ist, wobei in dem Strömungskanal (2) ein Rückhalteelement (4) und ein Sperrkörpersitz (5) angeordnet sind, wobei das Rückhalteelement (4) eine Bewegung des Sperrkörpers (3) begrenzt, wobei sich der Sperrkörper (3) in einer ersten Durchströmungsrichtung des Fluids derart in die Sperrstellung bewegt, dass der Sperrkörper (3) an dem Sperrkörpersitz (5) dichtend anliegt und den Strömungskanal (2) verschließt, und wobei sich der Sperrkörper (3) in einer zweiten Durchströmungsrichtung des Fluids in die Durchlassstellung bewegt und den Strömungskanal (2) freigibt, wobei sich der Strömungskanal (2) zumindest um den Sperrkörper (3), das Rückhalteelement (4) und den Sperrkörpersitz (5) erstreckt und einstückig und materialeinheitlich ausgebildet ist sowie ein Rohr mit einem Rückschlagventil (1).

## Beschreibung

Die Erfindung betrifft ein Rückschlagventil, umfassend einen von einem Fluid durchströmbaren Strömungskanal und zumindest einen Sperrkörper, wobei der Sperrkörper in dem Strömungskanal beweglich angeordnet ist, wobei der Sperrkörper zwischen einer Sperrstellung und wenigstens einer Durchlassstellung bewegbar ist. Die Erfindung betrifft weiterhin ein Rohr mit einem Rückschlagventil.

Rückschlagventile sind allgemein bekannt und finden beispielsweise in Fluidkreisläufen Einsatz, wobei unter Fluidkreisläufen insbesondere Kühlkreisläufe und Klimakreisläufe zu verstehen sind, in welchen ein Kühlmittel oder ein Kältemittel zirkuliert. Rückschlagventile erlauben eine Durchströmung des Fluids durch den Strömungskanal lediglich in einer Richtung und sperren einen Fluidstrom in der Gegenrichtung ab. Dadurch kann beispielsweise verhindert werden, dass beim Abschalten von Aggregaten eine Rückströmung von Fluid erfolgt. Des Weiteren können Rückschlagventile genutzt werden, um in komplizierteren Fluidkreisläufen Fluidströme zu lenken.

Ein Einsatzgebiet von Rückschlagventilen findet sich in Temperierkreisläufen im Bereich der Elektromobilität. Zur Erzielung einer hohen Reichweite von Elektrofahrzeugen ist es beispielsweise erforderlich, elektrische Komponenten zu temperieren. Zu temperierende Komponenten von Elektrofahrzeugen sind dabei insbesondere elektrische Energiespeicher, aber auch die Leistungselektronik oder Steckverbindungen von Schnellladeeinrichtungen. Ein elektrischer Energiespeicher hat eine bestmögliche Kapazität nur in einem sehr kleinen Temperaturspektrum. Daher ist es erforderlich, elektrische Energiespeicher von Elektrofahrzeugen bei tiefen Umgebungstemperaturen zu erwärmen und bei hohen Außentemperaturen oder bei hohen Lastwechseln zu kühlen.

Der Erfindung liegt die Aufgabe zugrunde, ein Rückschlagventil bereitzustellen, welches kostengünstig herstellbar ist.

Die Aufgabe wird mit den Merkmalen von Anspruch 1 gelöst. Auf vorteilhafte Ausgestaltungen nehmen die Unteransprüche Bezug.

Das erfindungsgemäße Rückschlagventil umfasst einen von einem Fluid durchströmbaren Strömungskanal und zumindest einen Sperrkörper, wobei der Sperrkörper in dem Strömungskanal beweglich angeordnet ist, wobei der Sperrkörper zwischen einer Sperrstellung und einer Durchlassstellung bewegbar ist, wobei in dem Strömungskanal ein Rückhalteelement und ein Sperrkörpersitz angeordnet sind, wobei das Rückhalteelement eine Bewegung des Sperrkörpers begrenzt, wobei sich der Sperrkörper in einer ersten Durchströmungsrichtung des Fluids derart in die Sperrstellung bewegt, dass der Sperrkörper an dem Sperrkörpersitz dichtend anliegt und den Strömungskanal verschließt, und wobei sich der Sperrkörper in einer zweiten Durchströmungsrichtung des Fluids in die Durchlassstellung bewegt und den Strömungskanal freigibt, wobei sich der Strömungskanal zumindest um den Sperrkörper, das Rückhalteelement und den Sperrkörpersitz erstreckt und einstückig und materialeinheitlich ausgebildet ist.

Durch die einstückige und materialeinheitliche Ausbildung des Strömungskanals ist es möglich, den Strömungskanal aus lediglich einem Bauelement auszubilden. Der Sperrkörper, das Rückhalteelement und der Sperrkörpersitz werden bei der Herstellung des Strömungskanals vorzugsweise direkt in den Strömungskanal oder in den Vorformling des Strömungskanals eingebracht. Der Sperrkörper, das Rückhalteelement und der Sperrkörpersitz sind dabei in den Strömungskanal integriert. Bislang sind die Gehäuse von Rückschlagventilen mehrteilig ausgebildet, wobei das Gehäuse nach der Montage des Sperrkörpers verschlossen wird. Durch die erfindungsgemäße einstückige Ausbildung des Strömungskanals kann die Dichtigkeit des Strömungskanals verbessert werden, insbesondere kann eine gesonderte Verbindung von Strömungskanalelementen zum nachträglichen Öffnen und Schließen des Strömungskanals vermieden werden. Zudem reduziert sich die Anzahl der erforderlichen Einzelbauteile für die Herstellung des Rückschlagventils.

Das erfindungsgemäße Rückschlagventil ist kompakt ausgebildet und die Komponenten sind verliersicher miteinander verbunden, wodurch der Montageaufwand reduziert wird. Dadurch kann das Rückschlagventil in hohen Stückzahlen kostengünstig hergestellt und montiert werden.

Der Sperrkörper ist in dem Strömungskanal beweglich angeordnet, wobei der Sperrkörper durch eine Druckdifferenz des durch den Strömungskanal strömenden Fluids bewegbar ist. In Abhängigkeit der Durchströmungsrichtung können unterschiedliche Druckdifferenzen an gegenüberliegenden Seiten des Sperrkörpers anliegen, so dass der Sperrkörper in die Sperrstellung oder die Durchlassstellung bewegt werden kann. In der Durchlassstellung ist der Sperrkörper von dem Sperrkörpersitz beabstandet, so dass das Fluid durch den Strömungskanal strömen kann. Die Bewegung des Sperrkörpers ist durch das Rückhalteelement begrenzt. Der Sperrkörper kann dabei in einer Endposition derart an dem Rückhalteelement anliegen, dass der offene Strömungsquerschnitt den maximalen Volumenstrom des Fluids ermöglicht. Dies ist auch von der Ausgestaltung des Rückhalteelementes abhängig. Das Rückhalteelement kann den Sperrkörper vor allem in Längsrichtung des Strömungskanals begrenzen.

Der Sperrkörper kann kugelförmig ausgebildet sein. Durch eine kugelförmige Ausbildung ist der Sperrkörper orientierungsunabhängig. Zudem kann die Gefahr eines Verkantens reduziert und die Betriebssicherheit erhöht werden. Ebenso verbessert sich die Montierbarkeit.

Denkbar sind aber auch andere geometrische Ausgestaltungen. Beispielsweise kann der Sperrkörper scheibenförmig, schirmförmig, klappenförmig, kegelförmig, als Paraboloide, als Ellipsoide. Darüber hinaus kann der Sperrkörper strömungsoptimiert ausgerüstet sein und beispielsweise mit Leitflügeln oder anderen Elementen zur Stabilisierung ausgerüstet sein. Vorteilhaft sind geometrische Ausgestaltungen deren Querschnitt sich in Längsrichtung des Strömungskanals in Richtung des Sperrkörpersitzes verjüngt. Dadurch kann eine Selbstzentrierung des Sperrkörpers bei einer Bewegung in die Sperrstellung unterstützt und ein Verkanten des Sperrkörpers vermieden werden, wodurch die Fehleranfälligkeit des Rückschlagventils verringert und somit auch die Handhabbarkeit weiter verbessert wird.

Der Sperrkörpersitz kann eine Öffnung und eine sich um die Öffnung erstreckende Dichtfläche umfassen. Sperrkörper und Sperrkörpersitz können zueinander kongruente Dichtflächen aufweisen, wobei die Dichtfläche des Sperrkörpers in der Sperrstellung dichtend an der Dichtfläche des Sperrkörpersitzes anliegt und dadurch die Öffnung verschließt. In der Durchlassstellung ist der Sperrkörper von der Dichtkante beabstandet und gibt dadurch die Öffnung frei.

Der Strömungskanal kann als Blasformteil ausgebildet sein. Durch das Blasformen ist es möglich, einen Strömungskanal mit einer komplexen Gestalt herzustellen. Beispielsweise kann der Strömungskanal in der für den Montageort erforderlichen Gestalt geformt, beispielsweise gekrümmt, sein. Des Weiteren ist es besonders einfach, Querschnittsänderungen in den Strömungskanal einzuformen. Beispielsweise können Abschnitte des Strömungskanals kreisförmig sein, wohingegen andere Abschnitte des Strömungskanal nicht rund, beispielsweise oval oder rechteckig, ausgebildet sind. Dadurch kann der Strömungskanal besonders platzsparend ausgebildet und an den Montageort angepasst sein. Der Sperrkörper, das Rückhalteelement und der Sperrkörpersitz können als vorgefertigte Bauelemente in den den Strömungskanal bildenden Vorformling eingeführt und anschließend der Strömungskanal mittels Blasformen ausgeformt werden. Dadurch sind der Sperrkörper, das Rückhalteelement und der Sperrkörpersitz direkt in den Strömungskanal integriert, so dass die Montage des Rückschlagventils einfach und kostengünstig ist. Der Strömungskanal kann durch das Blasformen besonders einfach und kostengünstig materialeinheitlich und einstückig hergestellt werden. Der Strömungskanal kann bevorzugt aus einem polymerem Material hergestellt werden. Je nach Umgebungsbedingungen und den Anforderungen des zu transportierenden Fluids kann die Wand des Strömungskanals einschichtig oder mehrschichtig ausgebildet sein. Im Fall der mehrschichtigen Ausgestaltung kann die Wand des Strömungskanals aus einem Kunststoff-Compound ausgebildet sein und mehrere unterschiedliche Kunststoffe umfassen.

Dem Sperrkörper kann in einer ersten Ausgestaltung zumindest eine Rückstellfeder zugeordnet sein, die dazu ausgebildet ist eine Rückstellkraft auf den Sperrkörper auszuüben, wobei die Rückstellkraft in Richtung auf den Sperrkörpersitz wirkt. Die Rückstellfeder kann so ausgebildet sein, dass sie den Sperrkörper selbsttätig an den Sperrkörpersitz andrückt, so dass die erste Durchströmungsrichtung für das Fluid versperrt ist. Durch die Rückstellkraft kann die Dichtigkeit in der ersten Durchströmungsrichtung verbessert werden. In der zweiten Durchströmungsrichtung kann das Fluid den Strömungskanal durchströmen, sofern der Differenzdruck des Fluids so groß ist, dass sich der Sperrkörper gegen die Rückstellkraft der Rückstellfeder von dem Sperrkörpersitz beabstandet. Die Rückstellkraft ist dabei von der Dimensionierung der Feder abhängig.

Alternativ ist auch denkbar, die Rückstellkraft mittels Einwirkung der Schwerkraft auf den Sperrkörper durch eine entsprechende Anordnung des Rückschlagventils zu erreichen. Dabei ist vorteilhaft, dass die Rückstellfeder entfallen kann.

Die Rückstellfeder kann aus Kunststoff ausgebildet sein. Dabei ist vorteilhaft, dass Kunststoffe korrosionsbeständig und kostengünstig sind. Dies ist insbesondere im Zusammenhang mit der Anwendung in der Elektromobilität vorteilhaft. Bei Akkumulatoren ist es möglich, dass im Schadfall Elektrolyt in den Kühlkreislauf gelangt. Die aus Kunststoff ausgebildete Rückstellfeder kann dabei aus einem Kunststoff ausgebildet sein, der beständig gegen derartige Elektrolyte ist. Alternativ ist auch denkbar die Rückstellkraft mittels Schwerkraft durch eine entsprechende Anordnung des Rückschlagventils zu erreichen.

Das Rückhalteelement und/oder der Sperrkörpersitz können einstückig und materialeinheitlich aus dem Strömungskanal ausgebildet sein. Dabei können das Rückhalteelement und/oder der Sperrkörpersitz einstückig und materialeinheitlich aus einer Mantelfläche des Strömungskanals ausgeformt sein. Bevorzugt ist das Rückhalteelement einstückig und materialeinheitlich aus dem Strömungskanal ausgebildet. Besonders bevorzugt sind das Rückhalteelement und der Sperrkörpersitz aus dem Strömungskanal ausgebildet. Bei dieser Ausführungsform sind zur Bereitstellung des Rückschlagventils lediglich zwei Bauelemente notwendig: der Strömungskanal und der Sperrkörper. Dadurch ergibt sich ein besonders kostengünstiges Rückschlagventil. Während des Herstellprozesses wird der Sperrkörper in dem Strömungskanal angeordnet, wobei der Sperrkörper beweglich und verliersicher in dem Strömungskanal angeordnet ist. Durch die Reduktion der benötigten Bauelemente werden Wartung, Montage und Handhabbarkeit des Rückschlagventils verbessert.

Das Rückhalteelement kann zumindest einen in das Innere des Strömungskanals ragenden Vorsprung aufweisen. In der Durchlassstellung kann der Sperrkörper an dem Vorsprung derart anliegen, dass der Vorsprung die Bewegung des Sperrkörpers begrenzt. Insbesondere kann der Vorsprung die Bewegung des Sperrkörpers in Längsrichtung des Strömungskanals begrenzen. Vorzugsweise weist das Rückhalteelement mehrere in das Innere des Strömungskanals ragende Vorsprünge auf, insbesondere mindestens drei Vorsprünge. Die Vorsprünge können über den Umfang verteilt angeordnet sein, vorzugsweise gleichmäßig über den Umfang verteilt.

Denkbar ist auch, dass das Rückhalteelement als ein in das Innere des Strömungskanals ragender Kragen ausgebildet ist. Dabei weist der Kragen Durchbrechungen auf, durch die das Fluid strömen kann. Vorzugsweise ist der Kragen umlaufend angeordnet. Insbesondere wenn der Sperrkörper an dem Rückhalteelement anliegt kann das Fluid durch die Durchbrechungen strömen.

Der Sperrkörpersitz kann einen in das Innere des Strömungskanals ragenden umlaufenden Dichtvorsprung aufweisen. In der Sperrstellung liegt der Sperrkörper dichtend an dem Dichtvorsprung an, wodurch ein Durchtritt des Fluids durch das Rückschlagventil verhindert wird.

Das Rückschlagventil kann einen Käfig aufweisen, wobei der Käfig das Rückhalteelement umfasst. Vorzugsweise ist der Käfig in dem Strömungskanal festgelegt. Hierzu kann der Käfig formschlüssig oder stoffschlüssig an dem Strömungskanal befestigt sein. Der Käfig kann insbesondere mit dem Strömungskanal verschweißt sein. Denkbar ist auch, dass der Käfig durch das Blasformen des Strömungskanals mit dem Strömungskanal stoffschlüssig verbunden ist.

Der Käfig kann den Sperrkörpersitz ausbilden. Vorzugsweise ist die Verbindung zwischen dem Käfig und dem Strömungskanal derart dichtend ausgestaltet, so dass zumindest im Bereich des Sperrkörpersitzes zwischen der Außenseite des Käfigs und der Innenseite des Strömungskanals kein Fluid hindurchtreten kann. Dadurch kann die Gefahr einer Bypass-Strömung reduziert werden. Der Sperrkörpersitz kann ringförmig ausgebildet sein.

Der Käfig kann ein separates Bauteil ausbilden, welches in den Strömungskanal eingebracht ist. Vorzugsweise wird der Käfig während des Herstellungsprozesses des Strömungskanals in den Strömungskanal eingebracht. Dadurch ist der Käfig verliersicher in dem Strömungskanal angeordnet. Der Käfig kann in den Vorformling des Strömungskanals eingeführt und dann der Strömungskanal mittels Blasformen ausgeformt werden, so dass der Käfig fest in den Strömungskanal integriert ist.

Der Käfig kann den Sperrkörper aufnehmen, wobei der Käfig und der Sperrkörper eine montierbare Baueinheit bilden können. Die Baueinheit kann dabei als Einleger ausgestaltet sein. Einleger sind Bauelemente, welche separat zu einem Hohlkörper ausgebildet sind, wobei der Einleger in dem Hohlkörper platzierbar ist. Der Einleger wird während des Herstellungsprozesses des Strömungskanals in den Strömungskanal eingebracht. Insbesondere bei der Herstellung des Strömungskanals im Blasformverfahren, kann der Einleger vor dem Blasformvorgang in die Blasform eingebracht und während des Blasformens an dem Strömungskanal festgelegt werden.

Der Käfig kann zumindest einen Führungsabschnitt aufweisen, der dazu ausgebildet ist, eine Bewegung des Sperrkörpers zu beschränken. Vorzugsweise wird eine Bewegung des Sperrkörpers in Längsrichtung des Strömungskanals mittels des Führungsabschnitts geführt. Durch den Führungsabschnitt kann die Gefahr des Verkippens und/oder der radialen Abweichung des Sperrkörpers relativ zum Sperrkörpersitz vermindert werden. Vorzugsweise weist der Käfig mindestens zwei Führungsabschnitte auf. Durch die geführte Bewegung des Sperrkörpers in die Sperrstellung wird ein dichtendes Anliegen des Sperrkörpers an dem Sperrkörpersitz unterstützt. Dadurch wird die Dichtigkeit des Rückschlagventils verbessert. Vorzugsweise greift der Sperrkörper in den Führungsabschnitt formschlüssige ein, um eine Führung zwischen Sperrkörper und Käfig auszubilden.

Der Sperrkörper kann gelenkig mit dem Käfig verbunden sein. Die Gelenkverbindung ist dabei vorzugsweise derart ausgestaltet, dass der Sperrkörper von der Sperrstellung in die Durchlassstellung und zurück geschwenkt werden kann. Der Sperrkörper kann dabei insbesondere als Klappe ausgestaltet sein.

Die der Erfindung zugrunde liegende Aufgabe wird auch durch ein Rohr mit einem beschriebenen Rückschlagventil gelöst, wobei das Rohr und der Strömungskanal materialeinheitlich und einstückig ausgebildet sind. Das Rohr kann Anschlüsse, beispielsweise Kupplungen oder Schnellverbinder, zum Verbinden von Komponenten aufweisen, so dass die Komponenten in der Durchlassstellung des Sperrkörpers strömungsverbunden sind. Das Rohr kann als länglicher Hohlkörper ausgebildet sein, wobei die einfache Gestalt des erfindungsgemäßen Rückschlagventils auch komplexere Rohrgeometrien zulässt, beispielsweise die Ausgestaltung von zwei länglichen Rohrabschnitten mit einem Rohrbogen dazwischen.

Weiterhin ist denkbar, dass mehrere Rohre zu einer Rohranordnung verbunden sind. Die Rohranordnung kann als Rohrbündel ausgebildet sein, wobei das Rohrbündel einstückig und materialeinheitlich ausgebildet sein kann. Insbesondere können das Rohr, die Rohranordnung und das Rohrbündel als Blasformteile ausgebildet sein.

Separate Verbindungsstellen zwischen einem Rückschlagventil und dem Strömungskanal können bei einer derartigen Gestaltung eingespart werden. Durch Verringerung möglicher Leckagestellen kann die Dichtigkeit verbessert werden. Zudem können weitere Montageschritte bei der Endmontage eingespart werden, wodurch die Handhabbarkeit verbessert wird. Das Rückschlagventil kann in einem Abschnitt des Rohres ausgebildet sein.

Die der Erfindung zugrunde liegende Aufgabe wird auch durch einen Temperierkreislauf mit zumindest einem beschriebenen Rückschlagventil und/oder zumindest einem beschriebenen Rohr gelöst. Der Temperierkreislauf kann in den elektromotorischen Antrieb eines Elektrofahrzeuges eingebunden sein und Temperiermedium transportieren. Über den Temperierkreislauf können elektrische Komponenten temperiert werden, um im Bereich der Elektromobilität hohe Reichweiten zu erzielen.

Eine Ausgestaltung des erfindungsgemäßen Rückschlagventils wird nachfolgend anhand der Figuren näher erläutert. Diese zeigen, jeweils schematisch:
- Fig. 1: eine erste Ausführungsform eines Rückschlagventils in Durchlassstellung;
- Fig. 2: eine Schnittansicht des Rückschlagventils aus Figur 1 in Durchlassstellung;
- Fig. 3: eine Schnittansicht des Rückschlagventils aus Figur 1 in Sperrstellung;
- Fig. 4: eine zweite Ausführungsform eines Rückschlagventils in Durchlassstellung;
- Fig. 5: eine Schnittansicht des Rückschlagventils aus Figur 4 in Durchlassstellung;
- Fig. 6: eine Schnittansicht des Rückschlagventils aus Figur 4 in Sperrstellung;
- Fig. 7: eine dritte Ausführungsform eines Rückschlagventils in Durchlassstellung;
- Fig. 8: eine Schnittansicht des Rückschlagventils aus Figur 7 in Durchlassstellung;
- Fig. 9: eine Schnittansicht des Rückschlagventils aus Figur 7 in Sperrstellung;
- Fig. 10: eine Schnittansicht einer vierten Ausführungsform eines Rückschlagventils in Durchlassstellung;
- Fig. 11: eine Schnittansicht des Rückschlagventils aus Figur 10 in Sperrstellung.

Die Figuren zeigen ein Rückschlagventil 1, umfassend einen von einem Fluid durchströmbaren Strömungskanal 2 und einen Sperrkörper 3. Das Rückschlagventil 1 bildet einen Bestandteil eines Temperierkreislaufs zum Transport von Temperiermedium. Konkret ist das Rückschlagventil in einen Temperierkreislauf eines elektromotorischen Antriebes eines Elektrofahrzeuges eingebunden. Das Rückschlagventil 1 erlaubt eine Durchströmung des in den Temperierkreislauf geführten Mediums lediglich in einer Strömungsrichtung und sperrt die Durchströmung in die Gegenrichtung weitgehend ab.

Das Rückschlagventil 1 ist in das Rohr einer Rohranordnung integriert. Dabei ist der Strömungskanal 2 Bestandteil des Rohres. Die Rohranordnung verbindet Komponenten eines Temperierkreislaufs.

Der Sperrkörper 3 ist in dem Strömungskanal 2 beweglich angeordnet und zwischen einer Sperrstellung und wenigstens einer Durchlassstellung bewegbar. In dem Strömungskanal 2 sind ein Rückhalteelement 4 und ein Sperrkörpersitz 5 angeordnet. Das Rückhalteelement 4 begrenzt eine Bewegung des Sperrkörpers 3. Der Sperrkörper 3 bewegt sich in einer ersten Durchströmungsrichtung des Fluids derart in die Sperrstellung, dass der Sperrkörper 3 an dem Sperrkörpersitz 5 dichtend anliegt und den Strömungskanal 2 verschließt. In einer zweiten Durchströmungsrichtung des Fluids bewegt sich der Sperrkörper 3 in die Durchlassstellung und gibt den Strömungskanal 2 frei. Der Strömungskanal 2 erstreckt sich zumindest um den Sperrkörper 3, das Rückhalteelement 4 und den Sperrkörpersitz 5 und ist einstückig und materialeinheitlich ausgebildet.

Der Strömungskanal 2 ist als materialeinheitliches und einstückiges Bauelement ausgebildet. Der Sperrkörper 3, das Rückhalteelement 4 und der Sperrkörpersitz 5 werden während der Formgebung des Strömungskanal 2 in den Strömungskanal 2 eingebracht, so dass ein Öffnen des Strömungskanal 2 nach dessen Herstellung vermieden werden kann. Der Sperrkörper 3, das Rückhalteelement 4 und der Sperrkörpersitz 5 sind dadurch in den Strömungskanal 2 integriert.

Der Strömungskanal 2 ist als Blasformteil aus polymerem Material rotationssymmetrisch ausgebildet. Der Strömungskanal 2 umfasst eine Eintrittsöffnung und eine Austrittsöffnung, wobei Eintrittsöffnung und Austrittsöffnung in der Durchlassstellung strömungsverbunden sind.

Der Sperrkörper 3 ist durch eine Druckdifferenz des durch den Strömungskanal 2 strömenden Fluids bewegbar. In Abhängigkeit der Strömungsrichtung können unterschiedliche Druckdifferenzen an dem Sperrkörper 3 anliegen, so dass der Sperrkörper 3 in die Sperrstellung oder die Durchlassstellung bewegt werden kann. In der Durchlassstellung ist der Sperrkörper 3 von dem Sperrkörpersitz 5 beabstandet, so dass das Fluid durch den Strömungskanal 2 strömen kann. In der von dem Sperrkörpersitz 5 abgewandten Durchlassstellung des Sperrkörpers 3, liegt der Sperrkörper 3 an dem Rückhalteelement 4 an, wodurch die Bewegung des Sperrkörpers 3 begrenzt wird.

Der Sperrkörpersitz 5 umfasst eine Öffnung und eine sich um die Öffnung erstreckende Dichtfläche. Sperrkörper 3 und Sperrkörpersitz 5 weisen zueinander kongruente Dichtflächen auf, wobei die Dichtfläche des Sperrkörpers 3 in der Sperrstellung dichtend an der Dichtfläche des Sperrkörpersitzes 5 anliegt und dadurch die Öffnung verschließt. In der Durchlassstellung ist der Sperrkörper 3 von der Dichtkante beabstandet und gibt dadurch die Öffnung frei.

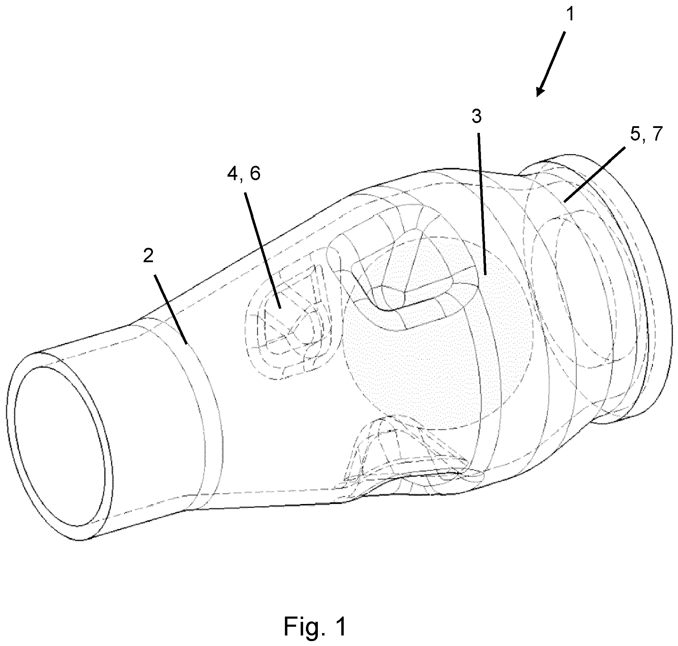

Die Figuren 1 bis 3 zeigen eine erste Ausführungsform eines Rückschlagventils 1. Bei dieser Ausführung ist der Sperrkörper 3 kugelförmig ausgebildet. Das Rückhalteelement 4 und der Sperrkörpersitz 5 sind einstückig und materialeinheitlich aus dem Strömungskanal 2 ausgebildet. Dabei ist das Rückhalteelement 4 und der Sperrkörpersitz 5 einstückig und materialeinheitlich aus einer Mantelfläche des Strömungskanal 2 ausgeformt. Der Sperrkörper 3 ist beweglich und verliersicher in dem Strömungskanal 2 angeordnet.

Das Rückhalteelement 4 weist drei in das Innere des Strömungskanal 2 ragenden Vorsprünge 6 auf. Die Vorsprünge 6 sind gleichmäßig über den Umfang verteilt angeordnet. In der äußersten von dem Sperrkörpersitz 5 abgewandten Durchlassstellung des Sperrkörpers 3, liegt der Sperrkörper 3 an den Vorsprüngen 6 derart an, dass die Bewegung des Sperrkörpers 3 in Längsrichtung des Strömungskanal 2 begrenzt wird.

Der Sperrkörpersitz 5 weist einen in das Innere des Strömungskanal 2 ragenden umlaufenden Dichtvorsprung 7 auf. In der Sperrstellung liegt der Sperrkörper 3 dichtend an dem Dichtvorsprung 7 an, wodurch ein Durchtritt des Fluids durch das Rückschlagventil 1 verhindert wird.

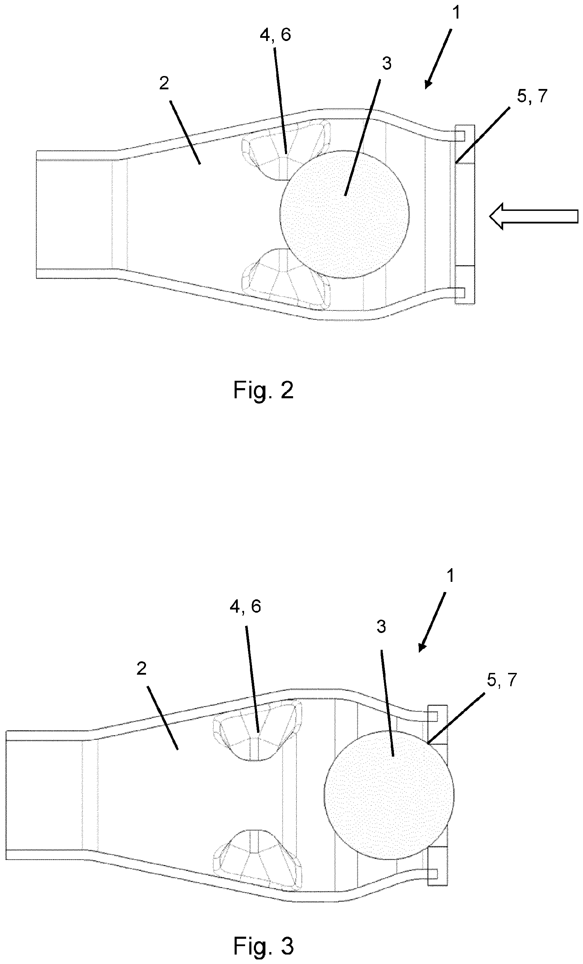

Figur 2 zeigt den Sperrkörper 3 in der Durchlassstellung. Der Sperrkörper 3 liegt an den Vorsprüngen 6 an, welche das Rückhalteelement 4 ausbilden. Die Strömungsrichtung des Fluids ist durch den Pfeil angedeutet. Das Fluid kann um den Sperrkörper 3 herum durch den Strömungskanal 2 strömen.

Figur 3 zeigt den Sperrkörper 3 in der Sperrstellung. Der Sperrkörper 3 liegt dichtend an dem Dichtvorsprung 7 an und blockiert dadurch den Strömungskanal 2, so dass das Fluid am Durchströmen gehindert ist.

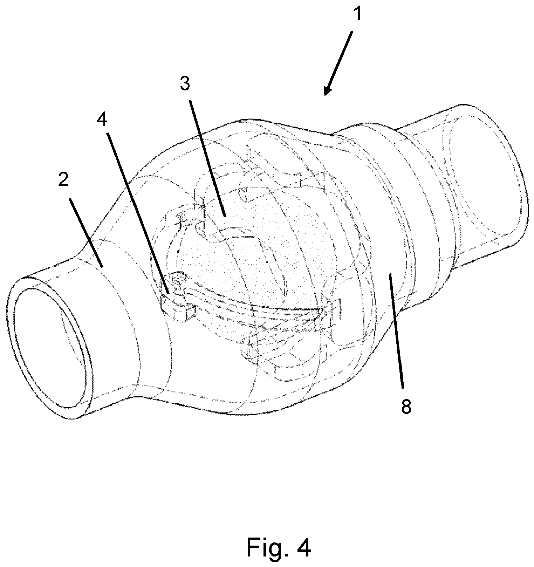

Die Figuren 4 bis 6 zeigen eine zweite Ausführungsform eines Rückschlagventils 1. Der Sperrkörper 3 ist bei dieser Ausgestaltung ebenfalls kugelförmig ausgebildet.
Das Rückschlagventil 1 weist einen Käfig 8 auf, wobei der Käfig 8 das Rückhalteelement 4 und den Sperrkörpersitz 5 ausbildet. Der Käfig 8 ist mit dem Strömungskanal 2 stoffschlüssig verbunden. Der Käfig 8 ist dabei abschnittsweise außenumfänglich mit der Innenseite des Strömungskanal 2 verbunden, wobei die Verbindung zwischen dem Käfig 8 und dem Strömungskanal 2 dichtend ausgestaltet ist, so dass im Bereich des Sperrkörpersitzes 5 zwischen der Außenseite des Käfigs 8 und der Innenseite des Strömungskanal 2 kein Fluid hindurchtreten kann.

Der Käfig 8 ist als separates Bauteil in den Strömungskanal 2 eingebracht. Der Käfig 8 wurde während des Herstellungsprozesses des Strömungskanal 2 in den Strömungskanal 2 eingebracht. Der Käfig 8 nimmt den Sperrkörper 3 auf und der Käfig 8 und der Sperrkörper 3 bilden eine Baueinheit. Die Baueinheit ist dabei als Einleger ausgestaltet und wurde vor dem Blasformvorgang in die Blasform eingebracht. Dabei wurde die Baueinheit in den Vorformling des Strömungskanals 2 eingeführt und dann der Strömungskanal 2 mittels Blasformen ausgeformt, so dass die Baueinheit direkt in den Strömungskanal 2 integriert ist. Während des Blasformens wurde der Käfig 8 an den Strömungskanal 2 angeformt. Der Käfig 8 ist stoffschlüssig mit dem Strömungskanal 2 verbunden und verliersicher in dem Strömungskanal 2 angeordnet.

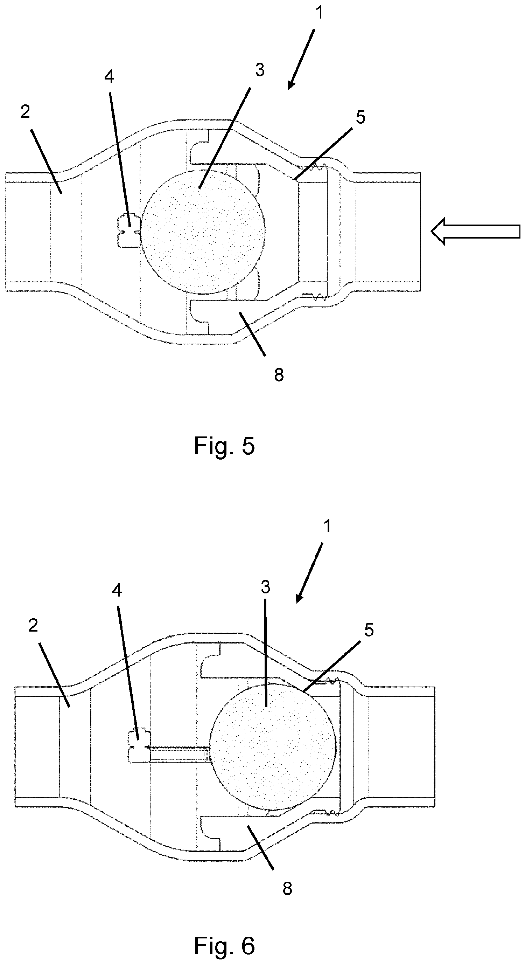

Figur 5 zeigt den Sperrkörper 3 in der Durchlassstellung. Der Sperrkörper 3 liegt an dem bügelförmigen Rückhalteelement 4 an, wodurch die Bewegung des Sperrkörpers 3 in Längsrichtung des Strömungskanals 2 begrenzt wird. Die Strömungsrichtung des Fluids ist durch den Pfeil angedeutet. Das Fluid kann um den Sperrkörper 3 herum durch den Strömungskanal 2 strömen.

Figur 6 zeigt den Sperrkörper 3 in der Sperrstellung. Der Sperrkörper 3 liegt dichtend an dem Käfig 8 an und blockiert dadurch den Strömungskanal 2, so dass das Fluid am Durchströmen gehindert ist.

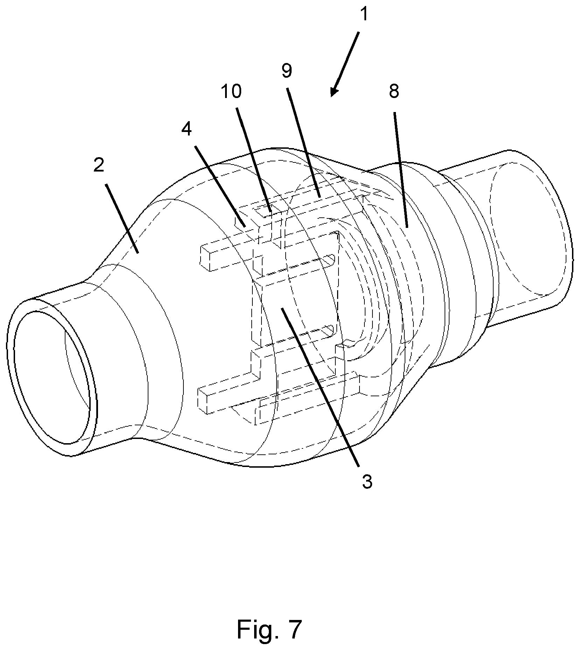

Die Figuren 7 bis 9 zeigen eine dritte Ausführungsform eines Rückschlagventils 1. Der Sperrkörper 3 ist bei dieser Ausführung schirmartig ausgebildet. Das Rückschlagventil 1 weist einen Käfig 8 auf, wobei der Käfig 8 das Rückhalteelement 4 und den Sperrkörpersitz 5 umfasst. Der Käfig 8 ist mit dem Strömungskanal 2 stoffschlüssig durch Verschweißen verbunden. Der Käfig 8 ist dabei außenumfänglich mit der Innenseite des Strömungskanal 2 verbunden, wobei die Verbindung zwischen dem Käfig 8 und dem Strömungskanal 2 dichtend ausgestaltet ist, so dass im Bereich des Sperrkörpersitzes 5 zwischen der Außenseite des Käfigs 8 und der Innenseite des Strömungskanal 2 kein Fluid hindurchtreten kann. In der Sperrstellung kann somit kein Fluid durch das Rückschlagventil 1 strömen.

Der Käfig 8 ist als separates Bauteil in den Strömungskanal 2 eingebracht. Der Käfig 8 wurde während des Herstellungsprozesses des Strömungskanal 2 in den Strömungskanal 2 eingebracht. Der Käfig 8 ist verliersicher in dem Strömungskanal 2 angeordnet.

Der Käfig 8 nimmt den Sperrkörper 3 auf und der Käfig 8 und der Sperrkörper 3 bilden eine Baueinheit. Die Baueinheit ist dabei als Einleger ausgestaltet und wurde vor dem Blasformvorgang in die Blasform eingebracht und während des Blasformens an den Strömungskanal 2 angeformt.

Zudem weist der Käfig 8 zwei Führungsabschnitte 9 auf, die dazu ausgebildet sind eine Bewegung des Sperrkörpers 3 in Längsrichtung des Strömungskanal 2 zu führen. Durch die Führungsabschnitte 9 kann ein Verkippen und eine radiale Abweichung des Sperrkörpers 3 relativ zum Sperrkörpersitz 5 verhindert oder zumindest vermindert werden. Die Führungsabschnitte 9 werden jeweils durch eine im Käfig 8 angeordnete Ausnehmung gebildete, in die am Sperrkörper 3 angeordneten Führungsstutzen 10 eingreifen können.

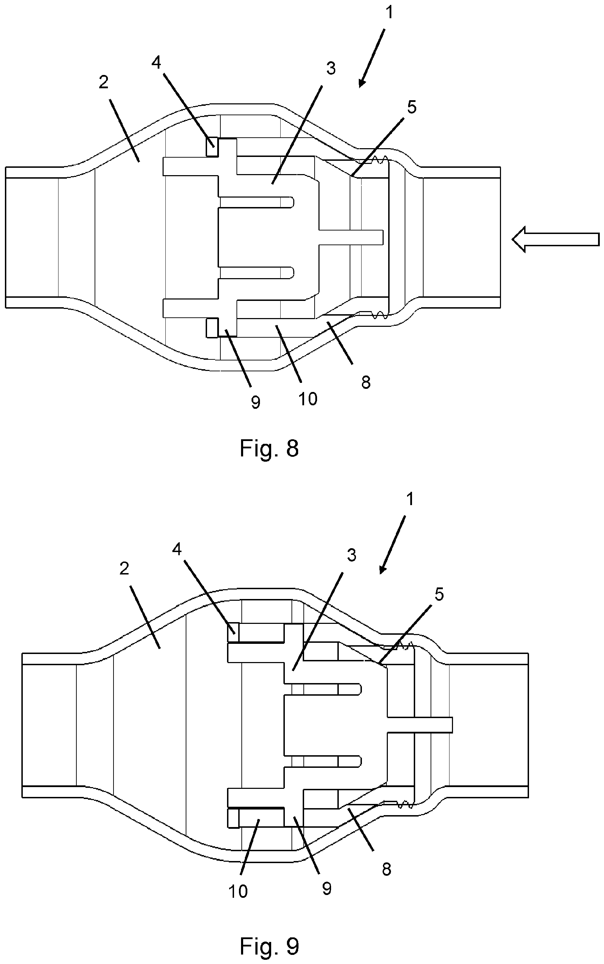

Figur 8 zeigt den Sperrkörper 3 in der Durchlassstellung. Der Sperrkörper 3 liegt in der der Durchlassstellung zugeordneten Endposition der Führungsabschnitte 9 an dem Rückhalteelement 4 an, wodurch die Bewegung des Sperrkörpers 3 in Längsrichtung des Strömungskanals 2 begrenzt wird. Die Strömungsrichtung des Fluids ist durch den Pfeil angedeutet. Das Fluid kann um den Sperrkörper 3 herum durch den Strömungskanal 2 strömen.

Figur 9 zeigt den Sperrkörper 3 in der Sperrstellung. Der Sperrkörper 3 liegt dichtend an dem Käfig 8 an und blockiert dadurch den Strömungskanal 2, so dass das Fluid am Durchströmen gehindert ist.

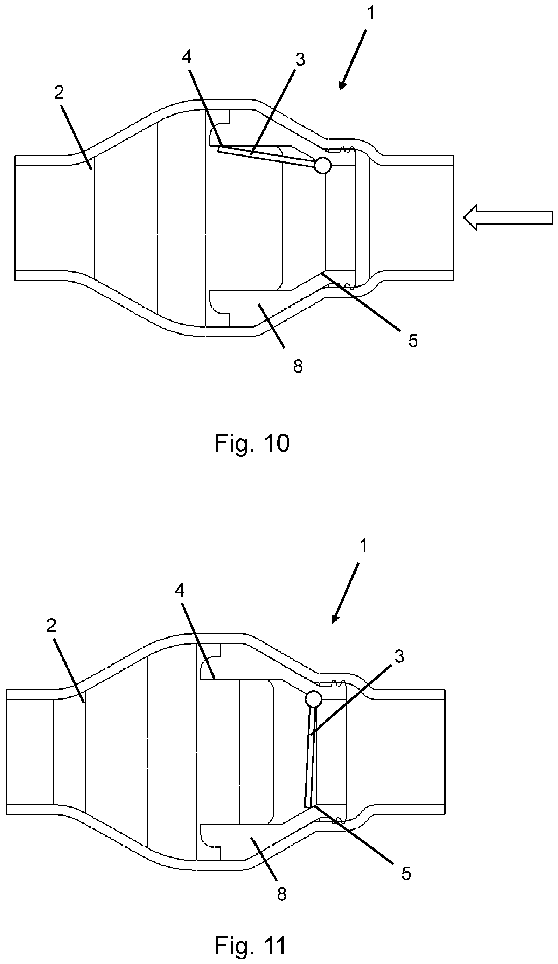

Die Figuren 10 und 11 zeigen eine vierte Ausführungsform eines Rückschlagventils 1. Das Rückschlagventil 1 weist einen Käfig 8 auf, wobei der Käfig 8 den Sperrkörpersitz 5 umfasst. Bei dieser Ausführung ist der Sperrkörper 3 als Klappe ausgebildet und über ein Gelenk an dem Käfig 8 angebunden.

Der Sperrkörper 3 kann durch eine Druckdifferenz des durch den Strömungskanal 2 strömenden Fluids bewegt werden. In Abhängigkeit der Durchströmungsrichtung können unterschiedliche Druckdifferenzen an dem Sperrkörper 3 anliegen, so dass der Sperrkörper 3 in die Sperrstellung oder die Durchlassstellung bewegt werden kann. In der Durchlassstellung ist der Sperrkörper 3 derart um das Gelenk gedreht, dass die dem Gelenk abgewandte Seite des Sperrkörpers 3 von dem Sperrkörpersitz 5 beabstandet ist, so dass das Fluid durch den Strömungskanal 2 strömen kann. In der Sperrstellung ist der Sperrkörper 3 derart um das Gelenk gedreht, dass der Sperrkörper 3 vollumfänglich an dem Sperrkörpersitz 5 dichtend anliegt und den Strömungskanal 2 verschließt.

Der Käfig 8 ist mit dem Strömungskanal 2 stoffschlüssig durch Verschweißen verbunden. Der Käfig 8 ist dabei außenumfänglich mit der Innenseite des Strömungskanal 2 verbunden, wobei die Verbindung zwischen dem Käfig 8 und dem Strömungskanal 2 dichtend ausgestaltet ist, so dass im Bereich des Sperrkörpersitzes 5 zwischen der Außenseite des Käfigs 8 und der Innenseite des Strömungskanal 2 kein Fluid hindurchtreten kann. In der Sperrstellung kann somit kein Fluid durch das Rückschlagventil 1 strömen.

Der Käfig 8 ist als separates Bauteil in den Strömungskanal 2 eingebracht. Der Käfig 8 wurde während des Herstellungsprozesses des Strömungskanal 2 in den Strömungskanal 2 eingebracht. Der Käfig 8 ist verliersicher in dem Strömungskanal 2 angeordnet.

Der Käfig 8 nimmt den Sperrkörper 3 auf und der Käfig 8 und der Sperrkörper 3 bilden eine Baueinheit. Die Baueinheit ist dabei als Einleger ausgestaltet und wurde vor dem Blasformvorgang in die Blasform eingebracht und während des Blasformens an den Strömungskanal 2 angeformt.

Figur 10 zeigt den Sperrkörper 3 in der Durchlassstellung. Der Sperrkörper 3 ist aufgeschwenkt und gibt den Strömungskanal 2 frei. Der Sperrkörper 3 liegt an dem Rückhalteelement 4 an, wodurch die Bewegung des Sperrkörpers 3 begrenzt wird Die Strömungsrichtung des Fluids ist durch den Pfeil angedeutet. Das Fluid kann durch den Strömungskanal 2 strömen.

Figur 11 zeigt den Sperrkörper 3 in der Sperrstellung. Der Sperrkörper 3 liegt dichtend an dem Käfig 8 an und blockiert dadurch den Strömungskanal 2, so dass das Fluid am Durchströmen gehindert ist.

## Patentansprüche

1. Rückschlagventil (1), umfassend einen von einem Fluid durchströmbaren Strömungskanal (2) und zumindest einen Sperrkörper (3), wobei der Sperrkörper (3) in dem Strömungskanal (2) beweglich angeordnet ist, wobei der Sperrkörper (3) zwischen einer Sperrstellung und einer Durchlassstellung bewegbar ist, wobei in dem Strömungskanal (2) ein Rückhalteelement (4) und ein Sperrkörpersitz (5) angeordnet sind, wobei das Rückhalteelement (4) eine Bewegung des Sperrkörpers (3) begrenzt, wobei sich der Sperrkörper (3) in einer ersten Durchströmungsrichtung des Fluids derart in die Sperrstellung bewegt, dass der Sperrkörper (3) an dem Sperrkörpersitz (5) dichtend anliegt und den Strömungskanal (2) verschließt, und wobei sich der Sperrkörper (3) in einer zweiten Durchströmungsrichtung des Fluids in die Durchlassstellung bewegt und den Strömungskanal (2) freigibt, **dadurch gekennzeichnet, dass** sich der Strömungskanal (2) zumindest um den Sperrkörper (3), das Rückhalteelement (4) und den Sperrkörpersitz (5) erstreckt und einstückig und materialeinheitlich ausgebildet ist.

2. Rückschlagventil nach Anspruch 1, **dadurch gekennzeichnet, dass** der Strömungskanal (2) als Blasformteil ausgebildet ist.

3. Rückschlagventil nach Anspruch 1 oder 2, **dadurch gekennzeichnet, dass** an dem Sperrkörper (3) zumindest eine Rückstellfeder angeordnet ist, die dazu ausgebildet ist eine Rückstellkraft auf den Sperrkörper (3) zu bewirken, wobei die Rückstellkraft in Richtung von dem Rückhalteelement (4) zu dem Sperrkörpersitz (5) wirkt.

4. Rückschlagventil nach einem der Ansprüche 1 bis 3, **dadurch gekennzeichnet, dass** das Rückhalteelement (4) und/oder der Sperrkörpersitz (5) einstückig und materialeinheitlich aus dem Strömungskanal (2) ausgebildet ist.

5. Rückschlagventil nach einem der Ansprüche 1 bis 4, **dadurch gekennzeichnet, dass** das Rückhalteelement (4) zumindest einen in das Innere des Strömungskanals (2) ragenden Vorsprung (6) aufweist.

6. Rückschlagventil nach einem der Ansprüche 1 bis 5, **dadurch gekennzeichnet, dass** der Sperrkörpersitz (5) einen in das Innere des Strömungskanals (2) ragenden umlaufenden Dichtvorsprung (7) aufweist.

7. Rückschlagventil nach einem der Ansprüche 1 bis 3, **dadurch gekennzeichnet, dass** das Rückschlagventil (1) einen Käfig (8) aufweist, wobei der Käfig (8) das Rückhalteelement (4) umfasst.

8. Rückschlagventil nach Anspruch 7, **dadurch gekennzeichnet, dass** der Käfig (8) den Sperrkörpersitz (5) umfasst.

9. Rückschlagventil nach einem der Ansprüche 7 oder 8, **dadurch gekennzeichnet, dass** der Käfig (8) als separates Bauteil in den Strömungskanal (2) eingebracht ist.

10. Rückschlagventil nach einem der Ansprüche 7 bis 9, **dadurch gekennzeichnet, dass** der Käfig (8) den Sperrkörper (3) aufnimmt und der Käfig (8) und der Sperrkörper (3) eine Baueinheit bilden.

11. Rückschlagventil nach einem der Ansprüche 7 bis 10, **dadurch gekennzeichnet, dass** der Käfig (8) zumindest einen Führungsabschnitt (9) aufweist, der dazu ausgebildet ist eine Bewegung des Sperrkörpers (3) zu beschränken.

12. Rückschlagventil nach einem der Ansprüche 7 bis 11, **dadurch gekennzeichnet, dass** der Sperrkörper (3) gelenkig mit dem Käfig (8) verbunden ist.

13. Rohr mit zumindest einem Rückschlagventil nach einem der vorherigen Ansprüche, **dadurch gekennzeichnet, dass** das Rohr und der Strömungskanal (2) materialeinheitlich und einstückig ausgebildet sind.

14. Rohr nach Anspruch 13, **dadurch gekennzeichnet, dass** das Rückschlagventil (1) in einem Abschnitt des Rohres ausgebildet ist.

15. Temperierkreislauf umfassend zumindest ein Rückschlagventil nach einem der Ansprüche 1 bis 12 und/oder zumindest einem Rohr nach einem der Ansprüche 13 oder 14.
